# EUROPÄISCHE PATENTANMELDUNG

(11) **EP 1 148 256 A2**
(43) Veröffentlichungstag der Anmeldung: **24.10.2001**
(21) Anmeldenummer: 01103289.3
(22) Anmeldetag: 13.02.2001
(51) Int. Cl.: F16B 12/20

(54) **Verbindungselement zum zugfesten und lösbaren Klemm- bzw. Pressverbinden, insbesondere von zwei Platten**

(30) Priorität: 17.02.2000 DE 20002838 U
(71) Anmelder: IPEG GmbH, Ingenieurdienstleistungen, 84180 Oberwolkersdorf (DE)
(72) Erfinder: Die Erfindernennung liegt noch nicht vor
(74) Vertreter: Meissner, Bolte & Partner

(57) **Zusammenfassung**

Aufgabe der vorliegenden Erfindung ist es, ein Verbindungselement zum zugfesten und lösbaren Verbinden, insbesondere von zwei Platten zu schaffen, das einerseits eine geringe Einbautiefe erfordert und andererseits eine stabile Verbindung mit entsprechenden Zusammenpresskräften zwischen den Platten für verschiedenste Einsatzzwecke schafft. An der Oberseite befinden sich zwei gegenüberliegende Backen, die jeweils zwei Gleitkulissen beherbergen und einen Exzenterriegel beim Einschieben einer Platte mit einer zum Rand hin offenen Bohrung (Randbohrung) dermaßen führen, dass der Exzenterriegel automatisch die eingeschobene Platte gegen ein ungewolltes Ausziehen sichert.

## Beschreibung

Die Erfindung betrifft ein Verbindungselement zum zugfesten und lösbaren Pressverbinden, insbesondere von zwei Platten, gemäß den Schutzansprüchen 1- 6.

Zum kraftschlüssigen Verbinden zweier Platten werden häufig Verbindungselemente eingesetzt, die eine Klemm-, Press- bzw. eine Rastverbindung zwischen den zu verbindenden Platten bewirken sollen. Solche Klemm-, Press- oder Rastverbindungen sollen einerseits leicht lösbar und andererseits eine möglichst zugfeste und stabile Verbindung sowie eine Vorspannung zwischen den Platten gemäß einer Schraubverbindung ermöglichen.

Aus der US 4,752,150 ist beispielsweise eine Rastverbindung bekannt, mit der eine erste Platte mittels einer Haken- und Schnappkonstruktion mit einer zweiten Platte verbunden werden kann. Die erste Platte erhält hierzu eine Bohrung, in die ein Grundkörper passgenau eingedrückt wird. Dieser Grundkörper beinhaltet einen Hakenmechanismus, der in ein entsprechendes Gegenstück in einer Platte zwei einrastbar ist.

Dieser Mechanismus ist aufwändig in der Herstellung und entsprechend teuer. Zudem ist eine Pressverbindung mit entsprechender Vorspannung, im Sinne eines justierbaren Mechanismus weder in Platte eins noch in Platte zwei realisierbar.

Aus EP 0611 002 A1 ist weiterhin eine Steck- bzw. Rastverbindung bekannt, bei der mit Hilfe eines einschlagbaren Dübels und einer Raste im Inneren eine Platte mit einer zweiten Platte mit entsprechendem Gegenstück durch Stecken verbunden wird.

Diese Verbindung ist wiederum nicht nachspannbar bzw. es wird kein meßbares Zusammenpressen der Platten bewirkt. Benötigt wird eine große Einbautiefe bzw. Plattendicke. Zudem ist bei beiden Patenten der Halt in den Platten lediglich durch die Übergröße des Grundkörpers bzw. des Dübels gegenüber dem Bohrloch gewährleistet. Ausgeleierte Löcher gewähren nur noch geringen oder keinen Halt für die Systeme.

Aufgabe der vorliegenden Erfindung ist es, ein Verbindungselement zum zugfesten und lösbaren Verbinden, insbesondere von zwei Platten zu schaffen, das einerseits eine geringe Einbautiefe erfordert und andererseits eine stabile Verbindung mit entsprechenden Zusammenpresskräften (Vorspannung) zwischen den Platten eins und zwei für verschiedenste Einsatzzwecke schafft, wobei die Befestigung in Platte zwei für sich gesehen diese Anforderung ebenfalls erfüllt (GE 200 02 838.3).

Diese Aufgabe wird durch ein Verbindungselement mit den Merkmalen des Schutzanspruches 1 gelöst. Bevorzugte Ausgestaltungen des Verbindungselements sind den abhängigen Ansprüchen entnehmbar.

Kern der Erfindung ist ein Verbindungselement, das einen Grundkörper mit einem dübelartigen Aufbau aufweist (GE 200 02 838.3). An der Oberseite befinden sich zwei gegenüberliegende Backen, die jeweils zwei Gleitkulissen beherbergen und einen Exzenterriegel beim Einschieben einer Platte mit einer zum Rand hin offenen Bohrung (Randbohrung) dermaßen führen, dass der Exzenterriegel automatisch die eingeschobene Platte gegen ein ungewolltes Ausziehen sichert. Durch Herunterdrücken eines Hebels bzw. mit Hilfe eines Schraubendrehers an der inneren Backe des Exzenterriegels kann eine Vorspannung oder ein Pressdruck zwischen erster Platte und zweiter Platte erzeugt werden. Ein feste Pressverbindung entsteht, ohne dass ein Werkzeug erforderlich wäre. Die Verbindung ist lösbar, indem die Rasten innerhalb der Gleitkulissen mit Hilfe eines Schraubenziehers weggedrückt werden und der Hebel in seine Ausgangsstellung zurückgeführt wird.

Die Pressverbindung eignet sich beidseitig besonders für dünne Platten, vorzugsweise ab 6 mm, die auch dynamischen Belastungen, vorzugsweise durch die Führung der gegenüberliegenden stabilen Backen standhält. Ferner sind lediglich einfache Bohrungen auf beiden Seiten erforderlich. Unter- und Hinterschneidungen der Bohrungen sind nicht notwendig, weil der Exzenterriegel mit Kraft gegen die Bohrung gepresst wird. Beide Platten bekommen eine Pressverbindung, die überprüfbare Vorspannkräfte aufweist und nachstellbar ist. Lockerungen durch Abnutzung besonders bei dynamischen Krafteinwirkungen in den Bohrlöchern, können dadurch leicht ausgeglichen werden.

Die gegenüberliegenden Backen auf dem Grundkörper decken zusammen mit den Führungskulissen die Bohrungen auf beiden Plattenseiten zuverlässig ab und ermöglichen ein attraktives Aussehen, das gestalterische Akzente durch ansprechende, wie z.B. farbige oder verchromte usw. Oberflächen, setzen kann.

Zudem besteht die Möglichkeit einer verdeckten Ausführung, die vorzugsweise bei Platten ab 12 mm aufwärts eingesetzt werden kann. Hierbei ist die grundlegende Technik entsprechend ausgeführt. Eine Gleitkulisse wird durch eine Kurbelwellenachse ersetzt, die in dem Langloch des Exzenterriegels Spiel hat und in einer inneren und äußeren Gehäusewand gelagert ist. Die Bewegung des Exzenterriegels wird in diesem Fall bereits vollständig durch das Anpressen der Platte eins an die Platte zwei erreicht. Ein weiterer Vorteil ist es, dass mit Hilfe der Kurbelwellenachse der Anpressdruck bzw. die Vorspannung zwischen den beiden Platten durch die bessere Hebelwirkung auf den Exzenterriegel noch erhöht werden kann. Die Verbindung ist lösbar, indem die Kurbelwellenachse zurückgedreht wird. Der Exzenterriegel wird in die ursprüngliche Lage gebracht, indem ein Schraubendreher in eine Aussparung in der äußeren Gehäusewand eingeführt wird.

Die verdeckte Version ist nur von innen sichtbar, gering größer als die Randbohrung in Platte eins.

Das erfindungsgemäße Verbindungselement kann in verschiedenen Bereichen vorteilhaft eingesetzt werden, wie beispielsweise im Möbelbau zum Verbinden von Platten aller, und auch unterschiedlicher Art und Ausführung, im Caravan- und Reisemobilbau, Messebau oder Schiffsinnenausbau. Das Verbindungselement bewirkt eine derart stabile Pressverbindung, dass es auch im Containerbau, Ladenbau, Leichtmetallbau, Akkustikbau oder Kunststoffbau anwendbar ist, also Einsatzgebieten, bei denen besonders hohe Belastungen der Verbindung auftreten können.

Vorteilhafterweise ist das Verbindungselement auch ohne Werkzeug montierbar und eignet sich für eine automatisierte und CNC gerechte Verarbeitung in der Industrie mit manueller Endmontage. Insgesamt ergibt sich eine einfach herzustellende Pressverbindung zwischen zwei auch unterschiedlichen Platten in Stärke und Art mit entsprechender Montagezeiteinsparung, erhöhten Auszugswerten und entsprechend hoher Wirtschaftlichkeit.

Der Grundkörper mit den Dübelkrallen und Sperrbolzen, die Backen mit den Gleitkulissen, der Exzenterriegel mit dem Hebel können aus Kunststoff oder Metall, oder aus Verbundstoffen hergestellt werden. Ausführungen in Kunststoff sind preiswert beispielsweise mittels Spritzgußverfahrens herzustellen, eine Ausführung in Metall ist besonders belastbar und stabil.

Weitere Vorteile und Ausführungsbeispiele der Erfindung sind in der nachfolgenden Beschreibung in Verbindung mit der Zeichnung angegeben. In den Zeichnungen zeigt
- Fig. 1: den Querschnitt eines ersten Ausführungsbeispiels eines Verbindungselementes im offenen Zustand
- Fig. 2: den Querschnitt eines ersten Ausführungsbeispiels eines Verbindungselementes im geschlossenen und verriegelten Zustand
- Fig. 3: ein isometrisches Bild eines Verbindungselementes im offenen Zustand
- Fig. 4: ein isometrisches Bild eines Verbindungselementes im geschlossenen und verriegelten Zustand
- Fig. 5: ein isometrisches Bild ohne innere Backe
- Fig. 6: den Querschnitt eines ersten verdeckten Ausrührungsbeispiels in Anlehnung an die Fig. 1 bis 5
- Fig. 7: den Querschnitt eines zweiten verdeckten Ausführungsbeispiels mit einer Kurbelwellenachse im offenen Zustand
- Fig. 8: den Querschnitt eines zweiten verdeckten Ausführungsbeispiels mit einer Kurbelwellenachse im geschlossenen und verriegelten Zustand
Gleiche Elemente in den Figuren sind mit gleichen Bezugszeichen versehen, so wie in GE 200 02 838.3.

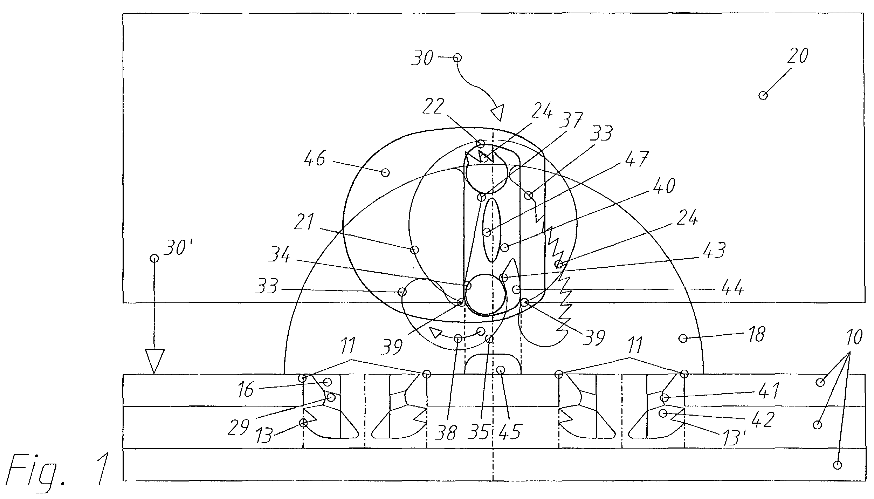

- Fig. 1: zeigt im Querschnitt die Klemm- bzw. Pressverbindung zweier Platten unterschiedlicher Dicke und oder Art (10) und (20) im offenen Zustand.
Die erste Platte (10) weist eine Bohrung (11) mit einer Tiefe von maximal 8 mm auf. Die zweite Platte (20) weist eine durchgehende Bohrung (21) auf, die an den Rand in entsprechendem Abstand gesetzt wurde (Randbohrung). Dadurch entsteht am Plattenrand eine genau definierte Öffnung (39). Die Raste (44) verhindert ein ungewolltes Zurückrutschen des Exzenterriegels (22) nach der Vormontage. Der Verbindungskanal (40) dient zur einfachen und automatischen Vormontage.

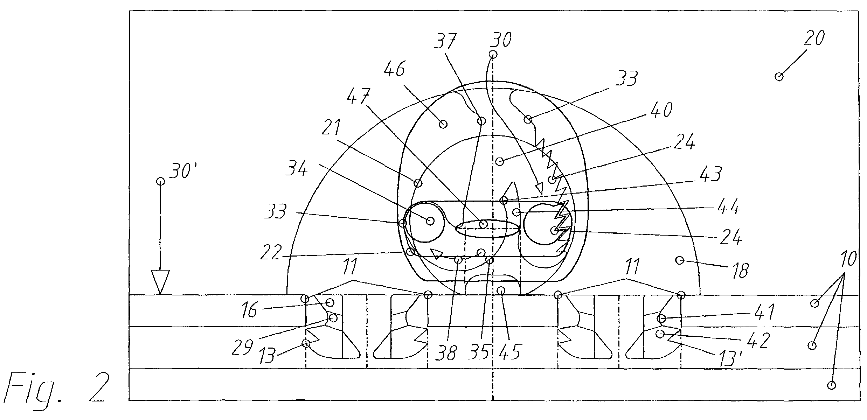

- Fig. 2: zeigt im Querschnitt die Klemm- bzw. Pressverbindung zweier Platten unterschiedlicher Dicke und Art (10) und (20) im geschlossenen und verriegelten Zustand.
Die Platte (20) wird zwischen die Backen (18, 18') geschoben in der Weise, dass sich die
Bohrung (21) genau über dem Exzenterriegel (22) befindet. Die Wandung der Bohrung
(21) drückt hierbei gegen den Exzenterriegel (22) und bewirkt, dass unter Überwindung des Rastwiderstandes (37) der Exzenterriegel (22) zwangsläufig die Bewegung (30) und
(38) entlang der Gleitkulissen (33) und des Abweisers (35) vollführt und die Platte (20) automatisch gegen Auszug verriegelt.
Der Schlitz (47) kann jetzt mit Hilfe eines Schraubendrehers in Richtung (30) bewegt werden und erzeugt mit Hilfe der Rastzähne (24) und der Gleitkulissen (33) einen Pressdruck in Richtung der Platte (10). Die Bewegung (30) kann auch mit Hilfe eines angearbeiteten Handhebels (nicht dargestellt) erzeugt werden. Die Platten (10) und (20) sind zugfest mit einem nachstellbarem Pressdruck verbunden. Die Backen (18) und (18') bieten zusätzlichen seitlichen Halt und Festigkeit gegen Scherkräfte.
Gelöst werden kann die Verbindung der Rastzähne (24) durch Beiseitedrücken der Sperrfeder (44) mit Hilfe eines Schraubendrehers oder eines ähnliches Werkzeugs. Die
Rastzähne (24) können auch die Form von Zahnradzähnen aufweisen.

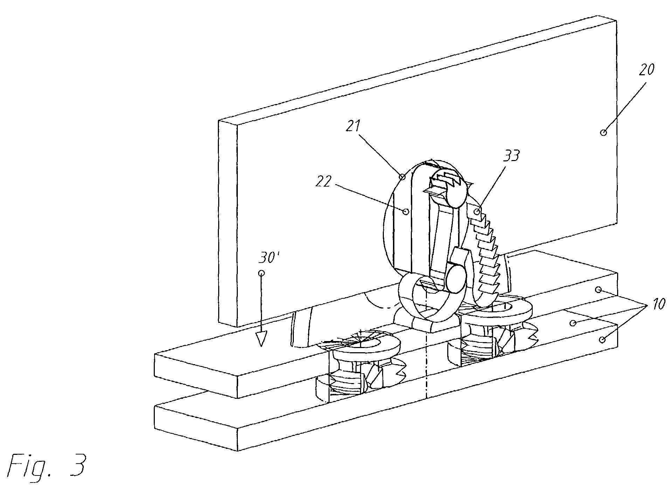

- Fig. 3: zeigt das offene System in einem isometrischen Bild.

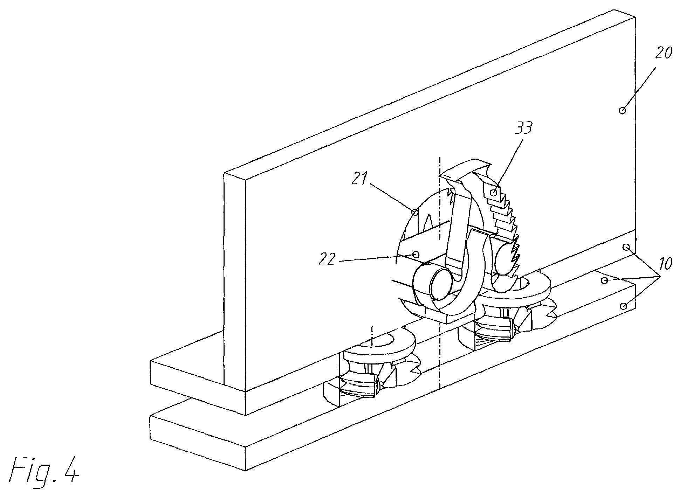

- Fig. 4: zeigt das geschlossene und verriegelte System in einem isometrischen Bild.

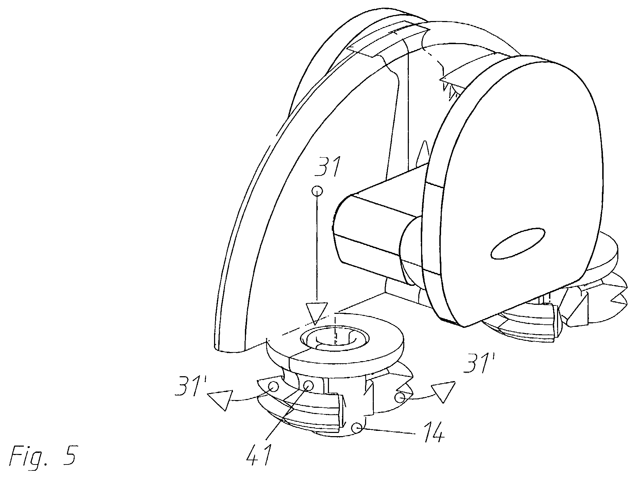

- Fig. 5: zeigt in einer isometrische Darstellung im Besonderen die Funktion der Sockeldübel, die zur Befestigung in der Platte (10) vorteilhaft eingesetzt werden können. Der Bolzen (14) bzw. die Schraube (14) wird eingepresst bzw. eingedreht (31) und drückt hierbei die Dübelkörper (42) auf Grund ihrer besonderen Ausformung mit Hilfe der Stege (29) gegen die Bohrungswandung (11) und erzeugt dadurch die Bewegung (31'). Die Bewegung (31') beschreibt einen geringen Bogen und ist somit letztlich gegenläufig, was im Zusammenhang mit den besonders geformten Dübelkrallen (13 und 13') eine Vorspannung gegen die Deckschichten der Platte (10) erzeugt und festen Halt gewährt. Der Sockel (16) gibt dem Dübel die nötige Basis und den erforderlichen Zusammenhalt. Besonders vorteilhaft ist bei der vorliegenden Ausführung die Aussparung (41), die im Besonderen den Einsatz bei Sandwichplatten unterschiedlicher Art ermöglicht (siehe auch Fig. 1 und 2).

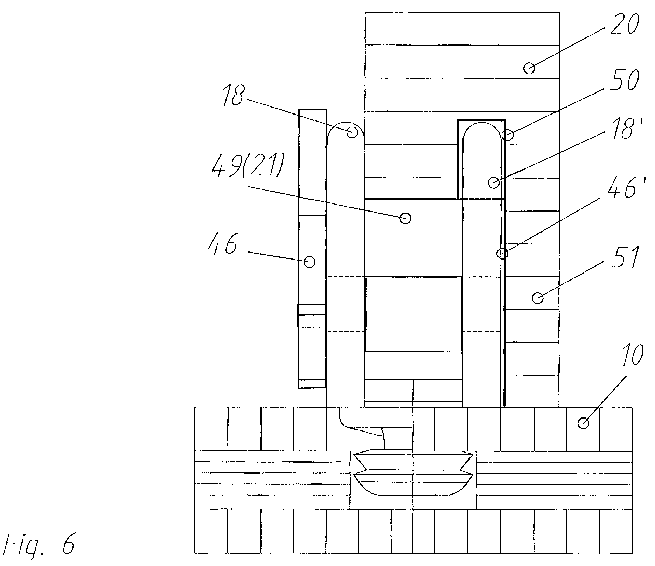

- Fig. 6: zeigt den Querschnitt des ersten verdeckten Ausführungsbeispiels. Dieses Ausführungsbeispiel entspricht im Wesentlichen der Ausführung der Fig. 1 bis 5, wobei lediglich die Abdeckung (46') weggelassen wurde. Hierbei schiebt sich die Backe (18') in eine Fräsung (50) innerhalb der Platte (20). Die Bohrung (49) (entspricht 21) ist nicht nach außen durchgebohrt. Es bleibt eine Deckschicht (51) als Teil der Platte (20) stehen. Diese Ausführung ist die kostengünstigste. Zudem erhält die Platte (20) durch die Position der Bakke (18') innerhalb der Fräsung (50) eine vorteilhafte seitliche Justierung.

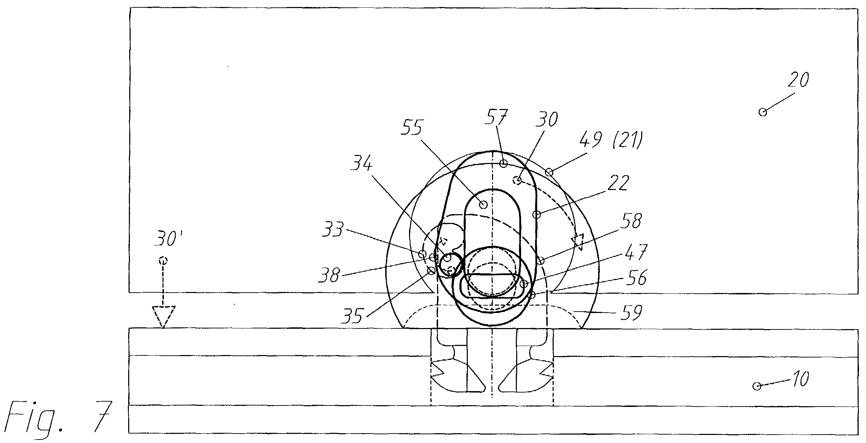

- Fig. 7: zeigt den Querschnitt des zweiten verdeckten Ausführungsbeispiel in der offenen Stellung. Diese Ausführung bedient sich des gleichen Prinzips des in einer offenen Randbohrung (49) sich automatisch quer stellenden Exzenterriegels (22). Der Exzenterriegel (22) wird durch Festhalterasten (nicht dargestellt) an Gehäuse (57) und (58) in der offenen Position gehalten. Die Platte (20) wird unter Überwindung des Widerstandes der Festhalterasten an den Gehäusenteilen (57) und (58) so gegen die Platte (10) gedrückt (Bewegung 30'), dass die Wandung der nicht durchgehenden Randbohrung (49) den Exzenterriegel (22) mit Hilfe der Gleitkulissen (33), der Gleitbolzen (34) und der Kurbelwellenachse (56) in eine querliegende Position (Bewegung 30 und 38) drückt und die Platte (20) automatisch gegen Auszug verriegelt. Die Gleitbolzen (34) des Exzenterriegels (22) sind in den Gleitkulissen (33) des inneren Gehäuseteils (58) sowie des äußeren Gehäuseteils (57) gelagert. Für die Kurbelwellenachse (56) gilt dies entsprechend. Eine einseitige Lagerung nur im äußeren Gehäuseteil (58) und (59) bei angepaßter Ausführung ist ebenfalls möglich.

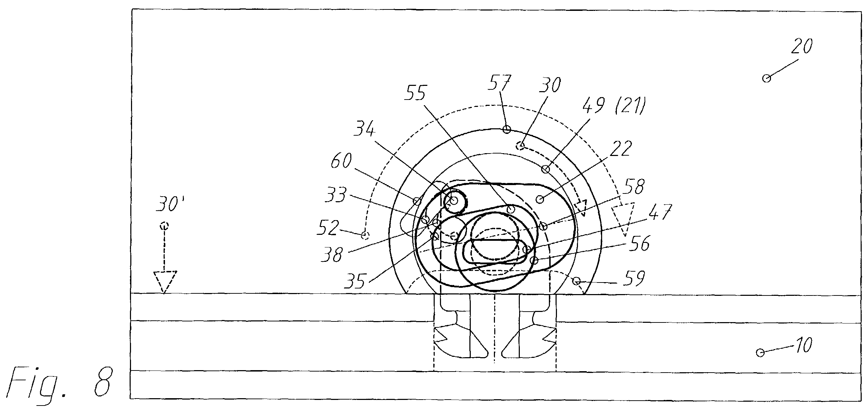

- Fig. 8: zeigt den Querschnitt des zweiten verdeckten Ausführungsbeispiels in der geschlossenen und verriegelten Stellung. In dieser Position kann der Exzenterriegel (22) an der Kurbelwellenachse (56) mit dem Schlitz (47) mit Hilfe eines Schraubendrehers gegen die Bohrung (49) gepresst werden (Drehung 52). Die Drehung (52) kann auch durch einen angearbeiteten Handhebel (nicht dargestellt) erzeugt werden. Der Exzenterriegel (22) kann an den Pressflächen längs der Drehung (52) mit einer sägezahn- und gewindeartigen Riffelung ausgestattet werden, um den seitlichen Halt der Platte (20) zu verbessern.
Der besondere Vorteil dieser Ausführung liegt in dem größeren Anpressdruck gegen die
Platte (10) durch die günstigere Hebelmechanik der Kurbelwellenachse (56). Das Gehäuse
(57) mit (59) ist nur wenig größer als die Randbohrung (49), was zu einer ansprechenden
Optik und geringer Baugröße führt.
Ein weiterer Vorteil liegt darin, dass die Druckflächen des Exzenterriegels (22) stärker als bei den anderen Ausführungen durch das Langloch (55) und der Kurbelwellenachse (56) eine ausgeglichene Druckverteilung erfahren,

Bei der Montage der Verbindungselemente werden in der Regel keine Werkzeuge benötigt.

Alle mit den Figurenbeschreibungen und Zeichnungen offenbarten Details der Erfindung werden als erfindungswesentlich beansprucht.

**Bezugszeichen**
- 10: Platte beliebiger Art, auch Sandwichplatte
- 11: Bohrung in Platte (10)

- 13+13': Dübelkrallen
- 14: Riegelbolzen oder Schraube bzw. abgeflachter horizontal drehbarer Bolzen mit Handhebel

- 16: Basisplatte Dübel

- 18+18': Haltebacken

- 20: zweite Platte beliebiger Art auch Sandwichplatte
- 21: Bohrung in Platte (20)
- 22: Exzenterriegel

- 24: Rastzähne

- 26: Handhebel angearbeitet

- 29: Verbindungssteg
- 30: Bewegung Exzenterriegel (22)
- 30': Bewegung Platte (20)
- 31: Bewegung Riegelbolzen (14)

- 33: Gleitkulissen
- 34: Gleitbolzen
- 35: Abweiser

- 37: Rastwiderstand
- 38: Bewegung Gleitbolzen (34) in unterer Gleitkulisse
- 39: Öffnung Randbohrung in Platte (20)
- 40: Verbindungskanal zwischen den Gleitkulissen zur Vormontage
- 41: Spezielle Ausformung des Dübelkörpers (42), angepaßt an die Deckschicht einer Sandwichplatte
- 42: einzelner oder Doppeldübelkörper
- 43: Raste, die das Zurückgleiten des Exzenterriegels (22) nach der Vormontage verhindert
- 44: Sperrfeder für die Verriegelung sowie für das Lösen der Verbindung
- 45: Verbindungssteg zur Stabilisierung der Basiskonstruktion
- 46+46': äußere Abdeckkappe des Exzenterriegels (22) zur Stabilisierung
- 47: Schlitz zum Drehen mittels Schraubendrehers

- 49: nicht durchgehende Randbohrung
- 50: Fräsung
- 51: verbleibende Deckschicht an der Sichtseite der Platte (20)

- 52: Bewegung Kurbelwellenachse (56)

- 54: Bewegung Exzenterriegel mit Hilfe der Kurbelwellenachse (56) zur Erzeugung eines Anpressdruckes
- 55: Langloch im Exzenterriegel (22)
- 56: Kurbelwellenachse
- 57: äußere Gehäusewand mit Lagerung der Kurbelwellenachse (56)
- 58: inneres Gehäuse mit Lagerung der Kurbelwellenachse (56)
- 59: Gehäuse Basis
- 60: Öffnung zum Lösen des Systems

## Patentansprüche

1. Verbindungselement zum zugfesten und lösbaren Klemm- bzw. Pressverbinden, insbesondere von zwei Platten beliebiger Art und unterschiedlicher oder gleicher Dicke mit
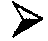 zwei an den Basisplatten (16) vorgesehenen Backen (18+18')
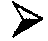 einer oder zwei an der Basisplatte (16) vorgesehenen Gehäusewänden (57) und (58), wobei die Gehäusewand (57) mindestens eine Aussparung (60) aufweist
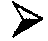 ein oder zwei gegenüberliegenden oder auch einseitig angeordneten Gleitkulissen (33) innerhalb der Backen (18+18') bzw. der Gehäuseteile (57) und (58)
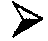 Gleitkulissen (33) mit einer definierter Führung mit oder ohne Rastzähnen (24)
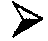 einer Kurbelwellenachse (56), die auch einseitig in der Gehäusewand (57) gelagert sein kann
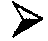 einer Kurbelwellenachse (56), die an den Lagerflächen zur Erhöhung der Reibung angerauhte oder geriffelte Oberflächen bzw. Rasten aufweisen kann
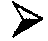 einem drehbar, innerhalb der Gleitkulissen (33) bzw. auf der Kurbelwellenachse (56) gelagerten, sich automatisch querstellenden und verriegelnden Exzenterriegels (22)
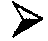 einem Exzenterriegel (22), der über das Gehäuse (57+58) bzw. über die Backen (18+18') des Verbindungselementes in der offenen Stellung (Fig. 1) herausragt
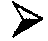 einem Exzenterriegel (22), der mit einem Langloch und einer sägezahn- und gewindeartiger Riffelung an den Druckflächen in Bewegungsrichtung (52) ausgestattet ist
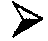 einem Exzenterriegel (22), der vertikal durch die Öffnung (39) der Randbohrung (21) und (49) paßt und dessen Druckflächen der Randbohrung (21) und (49) angepaßt sind
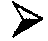 einem Exzenterriegel (22), der mit einem, zwei, drei oder vier Gleitbolzen (34) (auch einseitig und mit oder ohne Rasten (24)), die beweglich oder fest sein können, ausgestattet ist
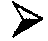 einem Exzenterriegel (22), der einen Handhebel oder Schlitz zur Fixierung aufweist
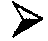 einem Exzenterriegel (22), der freischwingend mit Abweiser und Anschlag und einseitiger Gleitkulisse arbeitet.

2. Verbindungselement nach Anspruch 1, **dadurch gekennzeichnet, dass** es
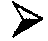 mit einem Rastwiderstand (37)
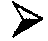 einen sachgerechten Verbindungskanal (40) zur Vormontage
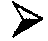 einer Sperrfeder (44) für die Verriegelung und zum Lösen
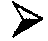 einen Abweiser (35)
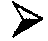 mit Rasten (24) die fest oder beweglich sind und eine sachdienliche Form haben ausgestattet ist.

3. Verbindungselement nach einem der vorgenannten Ansprüche, **dadurch gekennzeichnet, dass**
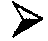 der Dübelkörper (42) eine spezielle Aussparung oder Kerbe (41) aufweist
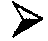 es eine Basisplatte (16) mit Dübelkörper (42) mit den Stegen (29) und den Dübelkrallen (13+13') aufweist
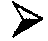 die Dübelkrallen (13) und (13') eine gegenläufige leicht bogenförmig Bewegung ausführen und damit eine Vorspannung gegen die Deckschichten der Platte (10) erzeugen
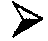 der Dübelkörper (42) eine Bautiefe von maximal 8 mm aufweist
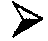 die Dübelkrallen (13) und (13') bzw. der Dübelkörper (42) mindestens paarweise, vertikal wie auch radial, angeordnet sind
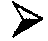 der Riegelbolzen (14) zum Einpressen bzw. zum Einschrauben sein kann, um eine Spreizung des Dübelkörpers (42) und der Dübelkrallen (13+13') zu erzeugen
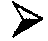 der Riegelbolzen (14) als beidseitig abgeflachter Bolzen, der sich horizontal drehen läßt und mit einem Handhebel ausgestattet sein kann, um eine Spreizung (Bewegung 31') des Dübelkörpers (42) und der Dübelkrallen (13+13') zu erzeugen.

4. Verbindungselement nach einem der vorgenannten Ansprüche, **dadurch gekennzeichnet, dass**
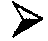 die Backe (18') der ersten verdeckten Ausführung innerhalb der Platte (20) in einer Fräsung (50) steckt und damit seitlichen Halt gewährt.

5. Verbindungselement nach einem der vorgenannten Ansprüche, **dadurch gekennzeichnet, dass**
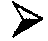 dass das Verbindungselement der zweiten verdeckten Ausführung eine geringe Baugröße aufweist kaum größer als die Randbohrung (49).

6. Verbindungselement nach einem der vorgenannten Ansprüche, **dadurch gekennzeichnet, dass**
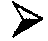 sämtliche Bauteile aus Kunststoff, zweikomponentigem Kunststoff, Faser armiertem Kunststoff, Verbundwerkstoff, Kunstoffmetallverbund, Metall und Ähnlichem hergestellt sein können.

7. Verbindung der ersten Platte (10) mit der zweiten Platte (20) mit einem Verbindungselement nach einem der Ansprüche 1 bis 6, unter Bezug auf GE 200 02 838.3, wobei der überstehende Exzenterriegel (22) ausgelöst durch die Bewegung (30') durch die Wandung der Randbohrung (21 bzw. 49) mit Hilfe von Gleitkulissen (33), den Gleitbolzen (34), bzw. einer Kurbelwellenachse (56), sich automatisch quer stellt (Bewegung 30 und 38) und gegen Auszug verriegelt. Durch die Bewegung (30) bzw. (52) wird innerhalb der Gleitkulissen (33) bzw. der Kurbelwellenachse (56) und der Rasten (24) der erwünschte Anpressdruck (54) gegen die Platte (10) und eine Pressverbindung zwischen den Platten (10) und (20) erreicht, die nachstellbar und wieder lösbar ist. Die Backen (18 und 18') bzw. die Fräsung (50) bzw. das Gehäuse (57) in Verbindung mit einer Profilierung der Druckflächen des Exzenterriegels (22) gewähren seitlichen Halt. Die Befestigung in der Platte (10) wird durch das Einpressen des Riegelbolzens (14) zwischen die Dübelkörper (42) bzw. durch das horizontale Drehen des abgeflachten Riegelbolzens (14) erreicht. Dabei werden die besonders ausgeformten Dübelkrallen (13) und (13') mit Kerbe (41) in einem geringen Bogen gegen die Bohrung (11) und die oberen Deckschichten der Platte (10) bewegt und verspannt. Demzufolge wird die Basisplatte (16) und der restliche Aufbau in der Platte (10) sicher und unter Vorspannung verankert.
